# EUROPEAN PATENT APPLICATION

(11) **EP 2 341 674 A1**
(43) Date of publication of application: **06.07.2011**
(21) Application number: 09306354.3
(22) Date of filing: 31.12.2009
(51) Int. Cl.: H04L 12/58, H04L 29/08

(54) **Method for disclosing data relating to an application, corresponding device and system**

(71) Applicant: Gemalto SA, 92190 Meudon (FR)
(72) Inventor: Delsuc, Julien, 13013 Marseille (FR)

(57) **Abstract**

The invention relates to a method for disclosing data relating to an application. At least two devices 12, 14, 16, 18, as first and second device, store 110 the application.

According to the invention, the first device 12, as node of a peer-to-peer network, sends to and/or receives from the second device 14, as at least another node of the peer-to-peer network, data Q1, Q2, Q3, Q4, R1, R2, R3, R4, R21 relating to the application.

The invention also relates to corresponding device and system.

## Description

### Field of the invention:

The invention relates, in a general manner, to a method for disclosing data relating to an application.

Furthermore, the invention relates to a device for disclosing data relating to an application.

Finally, the invention relates to a system for disclosing data relating to an application.

The present invention is applicable in particular when a user of a terminal embedding an application needs to provide or obtain information about the application, notably when a support or a maintenance relating to the application is requested.

### State of the art:

A first known solution is to propose a support service to end-users equipped with terminals embedding an application while using a dedicated phone line for an on-line support relating to the application.

However, such a first known solution implies to train a person (people) to be competent to solve, through a phone conversation, an issue relating to the concerned application that is presented by an end-user. Moreover, the person(people) should be available seven days a week and twenty four hours a day notably when the application is used over the world.

A second known solution is based upon a use of a remote server running a forum application and connected to terminals. The users of the terminals use the forum to share their knowledge, like how to find a solution for debugging the application.

However, such another solution requires having a central remote server that is dedicated to sharing information, heavy (since the remote server requires to be maintained) and therefore expensive to be managed.

Thus, there is a need to share knowledge between end-users in an efficient manner.

### Summary of the invention:

The invention proposes a solution for satisfying the just hereinabove specified need by providing a method for disclosing data relating to an application. At least two devices, as first and second device, store the application.

According to the invention, the first device, as node of a peer-to-peer network, sends to and/or receives from the second device, as another node of the peer-to-peer network, data relating to the application.

The principle of the invention consists in using a peer-to-peer (or P2P) network to share between devices of end-users information related to the application supported by the devices. Each device supporting the application constitutes a node of the peer-to-peer network.

The invention solution makes it possible to exchange directly between devices, as nodes of the peer-to-peer network, information relating to the application without involving any intermediary entity.

The invention solution does not impose any type of means for connecting two devices to each other, as nodes of the peer-to-peer network.

The invention solution does not imply, for any end user, to subscribe to a forum and is therefore user-friendly.

Accordingly, contrary to the second known solution that is described supra, the proposed solution does not require to involve any central remote server to let exchange information between end-user devices.

The invention solution is cheaper than the second known solutions since it does not require any maintenance at the remote server, as intermediary entity between the end-user devices.

Advantageously, the first device and the second device exchange, in an interactive manner and in real time, at least one question and/or at least one response relating to the application, as data relating to the application.

In other words, the users of the devices discuss directly and in live between each other without suffering from any external constraint delaying the transmission of the information.

According to a further aspect, the invention is a device for disclosing data relating to an application. The device, as first device, comprises means for storing the application.

According to the invention, the first device, as node of a peer-to-peer network, is adapted to send and/or receive data relating to the application.

The device may be a terminal or a token.

As terminal, it can be any device including means for processing data comprising or being connected to means for sending to and/or receiving data from outside, comprising or being connected to means for presenting data to a user, such as a loudspeaker, and/or a display screen, and comprising or being connected to means for storing data.

For example, the terminal may be a mobile telephone, a smart telephone, a Personal Digital Assistant (or PDA), a Personal Computer (or PC), a mobile laptop, a portable TeleVision (or TV), a set top box, and/or a netbook.

Within the present description, a token is a smart object that is intended to communicate with the outside world.

The token may cooperate with a terminal, as host device.

As token, it can be any electronic device comprising data processing means, at least one memory (or being connected to one memory(ies)), and an Input/Output (or I/O) communication interface. The token is any electronic medium that may have different form factors. The token can constitute any electronic medium, as a Secure Removable Module (or SRM).

For example, it can be embodied within a smart card, a smart dongle of the USB (acronym for "Universal Serial Bus") type , a Secure Digital card (or SD card), a Multi-Media Card (or MMC) or a chip to be fixed to a terminal, as host device, preferably in a removable manner.

According to a further aspect, the invention is a system for disclosing data relating to an application. The system comprises at least two devices, said first and second device. Each of the first and second devices comprises means for storing the application.

According to the invention, the first device, as node of a peer-to-peer network, is adapted to send to and/or receive from the second device, as another node of the peer-to-peer network, data relating to the application.

### Brief description of the drawings:

Additional features and advantages of the invention will be more clearly understandable after reading a detailed description of one preferred embodiment of the invention, given as one indicative and non-limitative example, in conjunction with the following drawings:

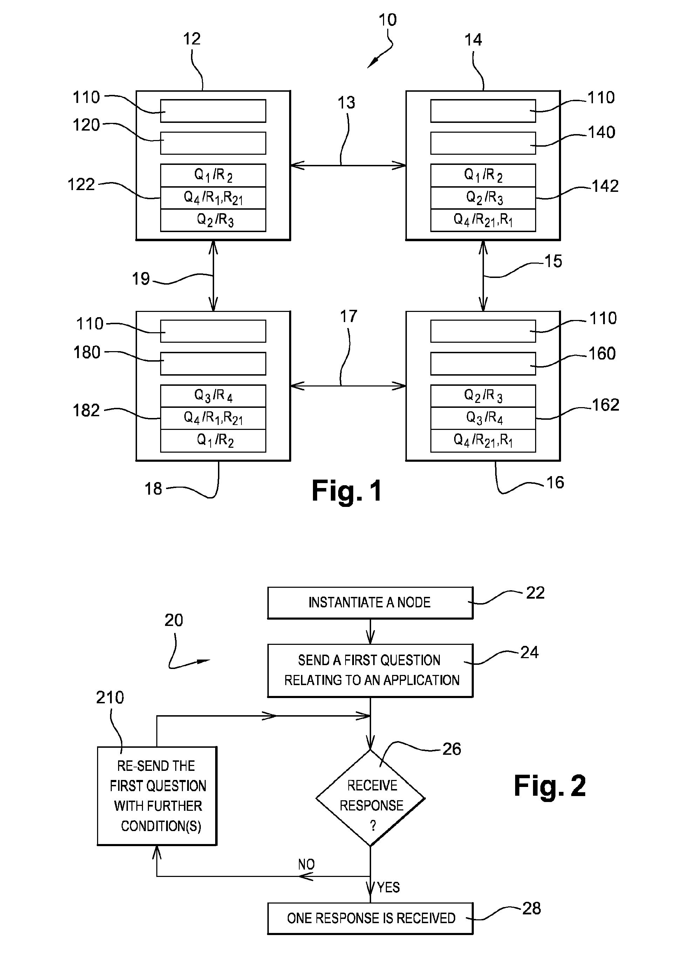

- Figure 1 represents a simplified diagram of one exemplary embodiment of a system for disclosing data relating to one application, the system comprising mobile telephones, as user terminals, supporting the same application, the system being adapted to let the terminals, as nodes of a peer-to-peer network, exchange data relating to the application and store it within the nodes of the peer-to-peer network, according to the invention; and
- Figure 2 illustrates a simplified flow chart of one embodiment of the method implemented notably by one user terminal of the system of figure 1, so as to share directly with at least some application users information relating to the application.

### Detailed description:

Herein under is considered a case in which the invention method for disclosing data relating to an application is implemented by several mobile telephones that are interconnected through one or several mobile radio-communication networks.

Nevertheless, the present invention method for disclosing data relating to an application may be implemented by several PCs that are interconnected through an Internet or Intranet type network without departing from the spirit of the invention.

Figure 1 shows schematically one exemplary embodiment of an electronic system 10 for disclosing data relating to an application.

The system 10 for disclosing data relating to an application includes, for example, a first mobile telephone 12, a second mobile telephone 14, a third mobile telephone 16, and a fourth mobile telephone 18.

The application is an application used by a user, such as a text processing application, a data processing application, or an Operating System.

For simplicity reasons, the mobile telephones 12, 14, 16 and 18 are respectively termed hereinafter the phones 12, 14, 16 and 18.

Four phones 12, 14, 16 and 18, as devices for disclosing data relating to the application, have been represented.

However, two or more phones may constitute the system for disclosing data relating to an application.

All the phones 12, 14, 16 and 18 support one and the same application 110.

Each phone 12, 14, 16 or 18 is preferably equipped with a display screen and/or a keyboard, as man machine interface(s).

The man machine interface(s) allows notably a phone user to interact with its own phone 12, 14, 16 or 18.

The user of the phone 12 needs some help from other users and/or devices 14, 16 and/or 18 that support the concerned application.

The help may be related to any domain of knowledge related to the application, such as a configuration of the application, a use of the application, a programming of functions for using the application, and/or other(s).

According to the invention, each phone 12, 14, 16 or 18 constitutes one node of a P2P network and acts as a provider and/or consumer of information relating to the application.

Thus, each phone 12, 14, 16 or 18 is comprised within a P2P network, as one particular node.

In other words, two phones may be connected to each other through another phone(s), as intermediary node(s) of the P2P network.

To connect another phone, each phone 12, 14, 16 or 18 is adapted to publish (or disclose) one Internet Protocol address, a phone number, and/or an identifier of the phone, like an International Mobile Subscriber Identity, so that its user and/or the concerned phone, as device, may be identified and reached through an email, a Short Message Service (or SMS) message, and/or an exchange file system.

For example, the phones 12 and 16 are linked via the other phone 14.

Each phone 12, 14, 16 or 18 includes data processing means, such as one microprocessor, at least one memory, as data storing means, and at least one Input/Output (or I/O) interface that are linked all together through a control and data bus (not represented).

The data storing means of each phone 12, 14, 16 or 18 may comprise one or several memories, such as flash memory(ies) and/or hard disk drive(s).

The data storing means of each phone 12, 14, 16 or 18 stores also an Operating System and/or, preferably, an application (for example, developed in C, C++, or Java programming language, or termed applet for this latter) that the user uses.

Each phone 12, 14, 16 or 18 is further arranged so that its user provides and/or consumes data relating to the application.

Each user of the phone 12, 14, 16 or 18 may declare herself or himself as being an expert of one or several domains relating to the application, like configuration parameters of the application, debugging matters, use of the application.

The data storing means of each phone 12, 14, 16 or 18 preferably stores a question(s) relating to the application and that is sent to at least another phone and/or a response(s) relating to an asked question relating to the application and that is received from at least another phone, as data relating to the application.

The data relating to the application is locally (i.e. within the stored and accessible from any other node of the P2P network by using, for example, a flash file system or a disk file system.

Alternately, instead of being stored within the phone 12, 14, 16 or 18, the phone 12, 14, 16 or 18 is adapted to send one question(s) and/or one response(s) to an asked question relating to the application, as data relating to the application to a SIM type smart card (not represented) (that is described infra in further details and termed card for simplicity reasons), as token coupled to the respective phone 12, 14, 16 or 18, so that the token stores it. As token, it can be any electronic device comprising data processing means, at least one memory (or being connected to one memory), and an Input/Output (or I/O) communication interface. The token is any electronic medium that may have different form factors. The token can constitute any electronic medium, as a Secure Removable Module (or SRM). For example, it can be embodied within a smart dongle of the USB (acronym for "Universal Serial Bus") type, a Secure Digital card (or SD card), a Multi-Media Card (or MMC) or a chip to be fixed to a terminal, as host device, possibly in a removable manner.

For example, each time a user of one phone 12, 14, 16 or 18 is involved so as to issue a question or a response to an asked question relating to the application, the corresponding phone 12, 14, 16 or 18 stores locally (i.e. either within the phone memories or within a token memory) the generated question(s) and possible response(s). Thus, at least two nodes of the P2P network store the data relating to the application and originating from any user of the phones 12, 14, 16 and/or 18. Such an example of embodiment allows duplicating a question and a response(s) to an asked question, namely at a phone that issues the question and at another phone that issues at least one corresponding response. Moreover, each time one phone 12, 14, 16 or 18, as intermediary node of the P2P network, between two other phones 12, 14, 16 or 18, as senders of data relating to the application, the involved phone 12, 14, 16 or 18, as intermediary node of the P2P network, stores locally (i.e. either within the phone memories or within a token memory) the transferred question(s) and/or response(s). In such an environment, namely when at least one phone included between two other phones that exchange data relating to the application, at least three nodes of the P2P network stores the data relating to the application and originating from any user of the phones 12, 14, 16 and/or 18.

For example, within the illustrated exemplary system 10, the first phone 12 sends to a part or all the users of the other phones, as nodes of the P2P network, a first question denoted Q1 (for example, the index reflecting the number of the phone that issues the question and/or the response) that relates to the application and that originates from a user of the application, as first user. The first phone 12 stores locally, i.e. either within the phone memories 122 or within a token memory, the first question Q1 and a corresponding response when the first phone 12 receives it. A user of the application of the second phone 14, as second user, receives the question Q1 and responses to the first user with a response denoted R2 that is then stored at the first phone's 12 side. The second phone 14 stores locally, i.e. either within the phone memories 142 or within a token memory, the received first question Q1 and the sent response R2. Likewise, the second phone 14 sends a second question Q2 to only the third phone 16 since its user declares to be an expert (and the sole expert) relating to the corresponding domain of the second question Q2 and stores it locally, i.e. either within the phone memories 142 or within a token memory, as well as its corresponding response denoted R3 when received from the third phone 16. Once the second phone 14 receives the corresponding response R3, the second phone 14 may know how many potential intermediary nodes have stored the corresponding information. The second phone 14, as sender of the second question Q2, may send the second question Q2 accompanied with the corresponding response R3 to another phone(s), like the first phone 12. Thus, at least three phones store the same information relating to the application, so as to increase the number of application data replications, in order to keep an access to information relating to the application. The third phone 16 receives the second question Q2 and stores it locally, i.e. either within the phone memories 162 or within a token memory, as well as the corresponding response R3 given by a user of the third phone 16, as third user. The third phone 16 sends a third question Q3 to only the fourth phone 18 since its user declares to be an expert (and the sole expert) relating to the corresponding domain of the third question Q3 and stores it locally, i.e. either within the phone memories 162 or within a token memory, as well as its corresponding response denoted R4 when received from the fourth phone 18. The fourth phone 18 receives the third question Q3 and stores it locally, i.e. either within the phone memories 182 or within a token memory, as well as the corresponding response R4 given by a user of the fourth phone 18, as fourth user. The fourth phone 18 sends a fourth question Q4 to the first phone 12 and the second phone 14 since their respective users declare individually to be an expert (and the sole expert) relating to the domain of the third question Q4 and stores it locally, i.e. either within the phone memories 182 or within a token memory, as well as the corresponding response denoted R1 when received from the first phone 12 and the corresponding response denoted R21 (for example, the first digit indicating that the second phone 14 issues the response and the second digit indicating that only one intermediary node is present between the fourth and second phones 18 and 14, as sender of a question and sender of a corresponding response) when received from the second phone 14. The first phone 12 receives the fourth question Q4 and stores it locally, i.e. either within the phone memories 122 or within a token memory, as well as the corresponding response R1 given by the first user. The second phone 14 receives the fourth question Q4 and stores it locally, i.e. either within the phone memories 142 or within a token memory, as well as the corresponding response R21 given by the second user to the first user while being transferred through the third phone 16, as intermediary nodes of the P2P network between the fourth and second phones 16 and 14, as terminal nodes of the P2P network. The third phone 16 forwards the fourth question Q4 originating from the fourth phone 18 to the second phone 14 and the corresponding response R21 originating from the second phone 14 to the fourth phone 18. The third phone 16 stores, i.e. either within the phone memories 162 or within a token memory, the fourth question Q4 and the corresponding response R21 that is transferred through the third phone 16, as intermediary node of the P2P network between the fourth and second phones 18 and 14, as terminal nodes of the P2P network and sender of a question relating to the application and sender of a corresponding response relating to the application. Once the fourth phone 18 receives all the corresponding responses R1, and R21, the fourth phone 18, as sender of the fourth question Q4, may send the fourth question Q4 accompanied with the corresponding responses R1 and R21 to another phone(s), such as the first phone 12 and the second phone 14, as senders of one corresponding response. Thus, at least three phones store the same information relating to the application, so as to increase the number of application data replications, in order to keep an access to information relating to the application.

The arrangement consists preferably in a piece of computer program or software, such as, for example, a library (for example, developed in Java programming language), that is linked to the application.

In the further described embodiment, the piece of software is constituted by a library 120, 140, 160, 180 associated with the concerned application of each phone 12, 14, 16 or 18.

The library 120, 140, 160, 180, when executed, instantiates (i.e. creates an object) a node of a P2P network linking all the users of application. The instantiation allows allocating a memory space to the created object and initialising the created object.

Once all the phones 12, 14, 16 and 18 have executed its associated library 120, 140, 160 or 180, a first link 13 between the first and second phones 12 and 14, a second link 15 between the second and third phones 14 and 16, a third link 17 between the third and fourth phones 16 and 18, and a fourth link 19 between the first and fourth phones 12 and 18, are created. The created links 13, 15, 17 and 19 are bi-directional.

The library 120, 140, 160, 180 is a set of functions accessible from the concerned application of each phone 12, 14, 16 or 18, like a function call.

The library 120, 140, 160, 180 is preferably stored within the phone memories.

The library 120, 140, 160, 180 publishes preferably to any other node of the P2P network data relating to the application that is stored locally, i.e. within either the concerned associated phone memories 122, 142, 162, 182 or a memory of a card coupled with the corresponding phone 12, 14, 16, 18.

According to a variant, the library 120, 140, 160, 180 is stored within a memory of the card coupled with the phone. According to such a variant, the phone firstly retrieves the library within a card memory, loads it, and stores it within the phone memories before executing the library.

The library 120, 140, 160, 180 may be either downloaded from a remote server (not represented) or loaded at a process for issuing the phone or the token, preferably when the associated application is itself loaded into the concerned entity, namely the phone or the token.

The library 120, 140, 160, 180 has a function for asking a question relating to the application to at least some other application users, i.e. send a message transporting the question to at least some associated phones, as nodes of the P2P network.

The library 120, 140, 160, 180 has a function for responding to an asked question relating to the application to at least some other application users, i.e. send a message transporting a response to at least some associated phones, as nodes of the P2P network.

The library 120, 140, 160, 180 may have a function for forwarding to an emitter of an asked question relating to the application a response to the asked question while increasing a counter value comprised within a message including the response each time the message crosses the concerned phone 12, 14, 16, 18, as hosting device, as intermediary node comprised between a node of the P2P network, as sender of the asked question, and another node of the P2P network, as sender of a corresponding response.

The library 120, 140, 160, 180 may have a function for sending (or posting) to at least some application users a question or information, i.e. send a message transporting the question or information to at least some associated phones, as nodes of the P2P network.

The library 120, 140, 160, 180 may have a function by which a user of the associated application gives her or his expertise level for one or several domains of knowledge related to the application.

The library 120, 140, 160, 180 may have a function by which at least one Internet Protocol address, at least one phone number of a user, and/or an identifier of the concerned phone (or the SIM type smart card coupled with it) of the application embedded by the phone is(are) automatically retrieved. In other words, the corresponding phone user is not involved so as to enter data relating to an identifier of a device storing the library, an IP address or a phone number to be used for reaching its user.

The library 120, 140, 160, 180 may have a function for letting a user of another phone of the P2P network control remotely the (local) application. For example, the user of the second phone 14 takes the control of the application supported by the first phone 12 once the user of the first phone 12 has authorized the second user to control it remotely. To authorize the second user to control it remotely, the second user may request the first user to connect to an IP address of the second user and possibly give her or him a password that the first user has to use.

The library 120, 140, 160, 180 may have a function for searching within the created P2P network one question(s) relating to the application and one response(s) relating to the question, for example by using at least one key word that may be present within the question(s) and/or the response(s). Thus, a user of the concerned phone may retrieve any data relating to the application that is stored in a distributed way within the P2P network.

The library 120, 140, 160, 180 may have a function for searching one node(s) comprised within the P2P network. Thus, a user may retrieve any node of the P2P network that is more or less away from the concerned phone.

The library 120, 140, 160, 180 may have a function for verifying whether a user of the concerned phone, as device user, has rights for accessing the P2P network. For example, such a user rights verification function compares data entered by a user with a Personal Identity Number that is been previously stored locally, i.e. within the phone memories or a card memory.

The library 120, 140, 160, 180 may have a function for incrementing a counter each time the concerned phone receives a response to a question that the phone issues.

The library 120, 140, 160, 180 may have a function for sending to at least another phone a message for replicating data relating to the application, so that information relating to the application is stored at least three times within the P2P network for example.

The library 120, 140, 160, 180 may have a function for increasing and/or decreasing automatically a value of the expertise level of the concerned user of the application for a certain domain. For example, the expertise level value is increased each time the user has responded to three asked questions on a certain domain while having a predefined maximum value. Likewise, the expertise level value for a certain domain is decreased when during a predefined period of time, like one or two months, the user has not answered to any asked question.

The microprocessor of each phone 12, 14, 16 or 18 executes, when triggered, notably the application and the associated library 120, 140, 160 or 180.

The microprocessor processes and controls data within the phone 12, 14, 16 or 18 and data to be exchanged with the exterior of the phone 12, 14, 16 or 18.

Each user of the phone 12, 14, 16 or 18 accesses the man machine interfaces, in order to be able to exploit a service relating to the library associated with the application, so as to exchange, through (an)other phone(s) 14, 16 and/or 18, with at least another user of the other phone(s) 14, 16, and/or 18, data relating to the application.

The I/O interface of each phone 12, 14, 16 or 18 includes a radio-transceiver that contains an antenna (not represented).

The I/O interface of each phone 12, 14, 16 or 18 is used for exchanging data with outside of the phone 12, 14, 16 or 18, as node of the P2P network, and notably send to and/or receive from at least another phone 14, 16 or 18, as another node of the P2P network, a question or a response relating to an asked question, as data relating to the application.

The I/O interface of each phone 12, 14, 16 or 18 is used for exchanging, via one or several communication channels, the data relating to the application with at least another phone 14, 16 and/or 18, as addressed external entity(ies).

The used communication channel(s) may be a voice communication channel, a video communication channel and/or a data communication channel.

The video communication channel may be a video conference communication channel.

As data communication channel, it may be constituted by a voice over Internet Protocol (or IP) channel.

The antenna (not represented) of each phone 12, 14, 16 or 18 allows communicating, via a long range radiofrequency link 13, 15, 17 and/or 19, through a mobile radio-telecommunication network (not represented), with the other phone(s) 14, 16 and/or 18, a question or a response relating to an asked question, as data relating to the application.

The mobile radio-telecommunication network comprises a 2G (acronym for a second generation network, i.e. GSM for "Global System for Mobile communications") network, a General Packet Radio Service (or GPRS) network, a 3G (acronym for a third generation network, i.e. UMTS for "Universal Mobile Telephone System") network, a CDMA (acronym for a "Code Division Multiple Access") network, a High Speed Packet Access (or HSPA) network, an Evolution Data Optimized (or Ev-DO) network, a Long Term Evolution (or LTE) network, and/or an Internet protocol Multimedia Subsystem (or IMS) network.

The I/O interface of each phone 12, 14, 16 or 18 may include an antenna (not represented) that allows communicating, via a short range radiofrequency link, like a Wimax link, a Wi-Fi link, a Bluetooth and/or an Infrared link(s), with the other phone(s) 14, 16 and/or 18, a question or a response relating to an asked question, as data relating to the application.

The I/O interface of each phone 12, 14, 16 or 18 may include a contact or contact-less interface, using, for example, a Universal Serial Bus (or USB) type protocol, to communicate data relating to the application, via a bi-directional link (not represented), with a SIM type smart card (not represented and termed card herein below), as token. The communicated data may be encrypted or not. The communicated data may be stored in an encrypted manner or not.

The token, instead of the card, may be a USB dongle, a Secure Digital (or SD) card, and/or a Multi Media Card (or MMC).

The token may be any entity that comprises at least one memory and at least one I/O interface(s) to exchange data with the token memory(ies).

The token may further include data processing means, such as one microprocessor.

The token memory may store the library associated with the application stored and run by the corresponding memories of the phone 12, 14, 16 or 18, as host device.

The token memory may be accessed by a user, through a server, a mass storage interface, or a network drive.

As token, the card may be a Universal Integrated Circuit Card (or UICC), as a Subscriber Identity Module (or SIM) type smart card, that cooperates with the associated phone, as terminal. The card securely stores an International Mobile Subscriber Identity (or IMSI), as a unique number associated with all GSM and UMTS network mobile phone users. The IMSI is used to identify a subscriber in relation to at least one mobile radio-communication network.

The card can be, for example, a SIM smart card for a GSM network, a Universal Subscriber Identity Module (or USIM) for a UMTS network or a LTE network, a Removable User Identity Module (or RUIM), a CDMA Subscriber Identity module (or CSIM) for a CDMA network, and/or an Internet Protocol multimedia Services Identity Module (or ISIM) for IP Multimedia Subsystem (or IMS).

Naturally, the just aforementioned list is not exhaustive but only for exemplifying purposes and is not considered to reduce the scope of the present invention.

The card is coupled with the phone.

The card includes a chip (not represented). The chip comprises a microprocessor, volatile and non volatile memories and at least one I/O interface linked together through a data and control internal bus (not shown).

The card microprocessor controls and communicates with all the components of the card, such as the card memories to read them and possibly write into them.

The card memories store data, in particular data relating to an Operating System and possibly one or several SIM ToolKit (or STK) applications.

The card memories may store within a corresponding file, termed application data file, at least one question relating to the application and/or at least one response to an asked question relating to the application, as data relating to the application.

The application data file stored within the card memories may be accessed by a user, through a server, also termed Smart Card Web Server (or SCWS), or a STK menu, stored within the card.

The card chip communicates with its host, namely the phone 12, 14, 16 or 18, through, for example, a contact interface (not represented) of the type ISO (acronym for « International Standard Organization ») 7816.

According to another embodiment, instead of the contact interface, the card and its host, namely the phone 12, 14, 16 or 18, are coupled to each other through a short range radiofrequency link, like a Wi-Fi link or Bluetooth link, as contact-less interface.

The card securely stores an International Mobile Subscriber Identity (or IMSI), as a unique number associated with all GSM and/or UMTS network mobile phone users. The IMSI is used to identify a subscriber in relation to at least one mobile radio-communication network.

The card chip may allow identifying and authenticating a user of the card, in order to be allowed to access the library and/or the generated data relating to the application. As soon as the user of the card has been authenticated (by providing a Personal Identity Number that is stored within the card and verified by the card), the user of the card accesses the library and/or the generated data relating to the application that belongs to the P2P network, as node of the P2P network.

Figure 2 shows one example of a sequence 20 of steps that is implemented by the first phone 12 while running the library 120 that is linked to the embedded application, so as to let benefit at least some or all the application users whose phones are included within the peer-to-peer network, from information relating to the application.

It is assumed that the first phone 12 executes the library 120. The execution of the library 120 lets store within a memory of the card (as token coupled with the first phone 12) any data relating to the application that is exchanged with another phone(s) 14, 16, and/or 18.

It is further assumed that the first user writes the first question Q1 that is addressed to the users of the other phones 14, 16, and 18 that also embed the same application and the same library and are connected to the P2P network.

Firstly, the first phone 12 instantiates 22 a node of the P2P network by connecting to another node(s) of the P2P network that is(are) running at the same time. The phone 12 is thus identified as node of the P2P network and may be addressed by any other node of the P2P network through at least one IP address of a user of the first phone 12, a phone number of the first phone 12, and/or an IMSI, as identifier of the first phone 12.

The first user writes, through the man machine interface of the first phone 12, a first question Q1 relating to the application. The first phone 12 stores within the card memory the first question Q1 relating to the application.

Then, the first phone 12, as node of the P2P network, sends 24 to the other phones 14, 16 and 18 the written first question Q1 after that the first user has activated a sending of the first question Q1 to the P2P network nodes for example without having specified any required expertise level value for the concerned domain.

Once the first phone 12 issues the first asked question Q1 to the other nodes of the P2P network, a user of any other phone, as node of the P2P network, may answer the asked question Q1 in an interactive manner and in live, i.e. in real time, by sending back one response to the originator of the first question Q1. For example, each user connected, through its phone 14, 16 and 18, to the P2P network receives a pop-up message with the asked first question Q1 that is displayed at the display screen of the associated phone 14, 16 or 18.

The first user may emit an asked question while specifying a domain of the asked question, a required expertise level value, and/or a constraint as to a given distance separating the first phone 12 from another corresponding phone 14, 16 or 18, as potential sender of a corresponding response. For example, the distance from the first phone 12, as node of the P2P network, is estimated by a ping mechanism consisting in addressing to itself (as sender) a message that is to be returned by a receiver of the message while determining the time period that is thus required. As another example, the distance is estimated by determining a count of node(s) of the P2P network that has(have) to be crossed so as to reach another node of the P2P network.

Any user of a phone of the P2P network may request some condition(s) for receiving an asked question to be satisfied, for example, by specifying the domain(s) to which she or he may respond, a required expertise level value of the asked question that has to be the one that she or he declares or is automatically determined by the library, a distance separating her or his phone from the phone of the user who asks a question in terms of a number of nodes that has to be crossed to reach the user phone, and/or if a number of responses that the phone user has already given, then any further asked question is rejected.

Then, the first phone 12 verifies 26 whether the first phone 12 does receive or does not receive at least one response to the first asked question Q1.

The first asked question Q1 is received by the other phones 14, 16 and 18.

Only the second user of the second phone 14 responds to the first asked question Q1 by writing a corresponding response R2 and sending it back to the first phone user by using, for example, the IP address of the first user. The third and fourth users do not respond to the first asked question.

Then, the first phone 12 receives 28 the corresponding response R2 from the second phone 14.

The first phone 12 stores within the card memory the corresponding response R2 originating from the second phone 14 while associating the corresponding response R2 with the first asked question Q1 in a file dedicated to a record of data relating to the application. The records that are stored within the file are kept accessible to any user of another phone 14, 16 or 18, as another node of the P2P network for any future search of a response for the concerned domain. The first user may mark the first asked question Q1, as being solved. The first user may trigger a direct conversation, as chat, with the second user, as sender of the corresponding response R2, so as to clarify the given response R2. Audio and/or video data may originate, in a simultaneous manner, from a microphone and/or a camera equipping the second phone 14 and/or an external microphone and/or a camera (not represented) being connected to the second phone 14, so that the second user clarifies in live the given response R2 before the first user.

As long as no corresponding response is received by the first phone 12, the first phone 12 waits for a receipt of a corresponding response while executing again the same response reception verification step 26.

Optionally, once a predetermined time period, such as a few seconds or minutes, has expired, the first phone 12 sends 210 again the first asked question Q1 to other phone(s) that is(are) more far away from the first phone 12 than the second, third and fourth phones 14, 16 and 18 and/or that is(are) used by a user of an expertise level value that is greater than the previous one, namely the one of the user of the second, third and fourth phones 14, 16 and 18.

Consequently, the users of all the first, second, third and fourth phones 12, 14, 16 and 18, as nodes of the P2P network benefit, in a direct, interactive and user friendly manner, from the information relating to the application that is stored at the first phone's 12 side and/or the knowledge of any other user of the P2P network.

The invention allows any user of a phone, as node of the P2P network, to benefit from knowledge of another P2P network node user(s).

## Claims

1. A method (20) for disclosing data relating to an application, at least two devices (12, 14, 16, 18), as first and second device, storing (110) the application,
**characterized in that** the first device, as node of a peer-to-peer network, sends (24) to and/or receives (28) from the second device, as at least another node of the peer-to-peer network, data (Q1, Q2, Q3, Q4, R1, R2, R3, R4, R21) relating to the application.

2. Method according to claim 2, wherein the first device and the second device exchange, in an interactive manner and in real time, at least one question (Q1) relating to the application and/or at least one response (R2) relating to the application.

3. Method according to claim 1 or 2, wherein the first device stores (Q1, R2) and publishes data relating to an expertise level of the first device user for at least one domain of knowledge related to the application; and/or
the first device sends to the second device at least one question relating to the application with a required expertise level.

4. Method according to any of claims 1 to 3, wherein at least the first device stores and publishes exchanged data relating to the application.

5. Method according to any of claims 1 to 4, wherein at least one device, as node of the peer-to-peer network, sends to at least another device, as another node of the peer-to-peer network, data for retrieving at least one question relating to the application and/or at least one response relating to the application and stored within at least one node of the peer-to-peer network.

6. A device (12, 14, 16, 18) for disclosing data relating to an application, the device, as first device, comprising means (110) for storing the application,
**characterized in that** the first device, as node of a peer-to-peer network, is adapted to send and/or receive data (Q1, R2, Q4, R1, R21) relating to the application.

7. Device according to claim 7, wherein the first device comprises means (122, 142, 162, 182) for storing the sent data relating to the application and/or the received data relating to the application.

8. Device according to claim 7 or 8, wherein the first device comprises means for disclosing:
- at least one Internet Protocol address and/or one phone number of a user of the first device, and/or an identifier of the first device within the peer-to-peer network; and/or
- the stored data relating to the application.

9. Device according to any of claims 7 to 9, wherein the first device comprises:
- means for controlling remotely the application;
- means for searching within the peer-to-peer network at least one question and/or at least one response relating to the application;
- means for searching at least another node of the peer-to-peer network; and/or
- means for verifying whether a first device user has rights for accessing the peer-to-peer network, as node of the peer-to-peer network.

10. A system for disclosing data relating to an application, the system comprising at least two devices (12, 14, 16, 18), said first and second device, each of the first and second devices comprising means (110) for storing the application,
**characterized in that** the first device (12), as node of a peer-to-peer network, is adapted to send to and/or receive from the second device (14), as another node of the peer-to-peer network, data relating to the application.
